# EUROPEAN PATENT APPLICATION

(11) **EP 4 611 217 A1**
(43) Date of publication of application: **03.09.2025**
(21) Application number: 23890594.7
(22) Date of filing: 31.10.2023
(51) Int. Cl.: H02J 50/70

(54) **ELECTRONIC DEVICE AND WIRELESS CHARGING SYSTEM**

(30) Priority: 17.11.2022 CN 202211440922
(71) Applicant: Huawei Technologies Co., Ltd., Shenzhen, Guangdong 518129 (CN)
(72) Inventor: SONG, Shilei, Shenzhen, Guangdong 518129 (CN); ZHANG, Yang, Shenzhen, Guangdong 518129 (CN); YAO, Yuliang, Shenzhen, Guangdong 518129 (CN); WANG, Zewen, Shenzhen, Guangdong 518129 (CN); YANG, Rongguang, Shenzhen, Guangdong 518129 (CN); ZHAO, Menglong, Shenzhen, Guangdong 518129 (CN); HUANG, Lizhong, Shenzhen, Guangdong 518129 (CN)
(74) Representative: Körber, Martin Hans
(86) International application number: PCT/CN2023/128691
(87) International publication number: WO 2024/104158

(57) **Abstract**

This application discloses an electronic device and a wireless charging system. The electronic device may include a housing, a receive coil, a magnetic shielding component, and a magnetic ring. The housing includes a lower cover, and the lower cover includes a first cover body and a second cover body connected to the first cover body. The magnetic shielding component is disposed on a side that is of the first cover body and that is close to a wireless charger. The receive coil is disposed on the side that is of the first cover body and that is close to the wireless charger, the receive coil is attached to the magnetic shielding component, and the receive coil is configured to: convert an alternating field transmitted by a transmit coil of the wireless charger into an alternating current, and transmit the alternating current to the electronic device for charging. The magnetic ring is disposed on an inner side and/or an outer side of the receive coil, and an inner cavity accommodating the magnetic ring is provided on a side that is of the second cover body and that is away from the wireless charger. In this application, magnetic leakage of the electronic device present during wireless charging can be reduced, and a coupling coefficient between the receive coil and the transmit coil can be increased. In this way, charging efficiency is improved.

## Description

### CROSS-REFERENCE TO RELATED APPLICATIONS

This application claims priority to Chinese Patent Application No. 202211440922.5, filed with the China National Intellectual Property Administration on November 17, 2022 and entitled "ELECTRONIC DEVICE AND WIRELESS CHARGING SYSTEM", which is incorporated herein by reference in its entirety.

### TECHNICAL FIELD

This application relates to the field of wireless charging technologies, and in particular, to an electronic device and a wireless charging system.

### BACKGROUND

Usually, a charging manner of an electronic device includes contact charging and wireless charging. The wireless charging manner is easy to use, and there is no spark or electric shock hazard. Therefore, wireless charging becomes a development direction of future electronic devices.

A receive coil of an existing electronic device is a planar coil. If the electronic device (for example, a wearable device such as a watch) needs to realize a heart rate detection function, a shielding material at the center of the receive coil of the electronic device needs to be hollowed out, to reserve a position for a heart rate board. In a charging scenario, severe magnetic leakage occurs at a center position of the receive coil of the electronic device, causing reduction in a coupling coefficient. As a result, an eddy current loss is formed on a metal component in the electronic device, and charging efficiency is reduced.

### SUMMARY

This application provides an electronic device and a wireless charging system. In this application, a magnetic leakage problem of the electronic device in a wireless charging process can be avoided, and wireless charging efficiency can be improved.

According to a first aspect, an embodiment of this application provides an electronic device, configured to perform wireless charging with a wireless charger, and including a housing, a receive coil, a magnetic shielding component, and a magnetic ring. The housing includes a lower cover, and the lower cover includes a first cover body and a second cover body connected to the first cover body. The magnetic shielding component is disposed on a side that is of the first cover body and that is close to the wireless charger. The receive coil is disposed on the side that is of the first cover body and that is close to the wireless charger, the receive coil is attached to the magnetic shielding component, and the receive coil is configured to: convert an alternating field transmitted by a transmit coil of the wireless charger into an alternating current, and transmit the alternating current to the electronic device for charging. The magnetic ring is disposed on an inner side and/or an outer side of the receive coil, and an inner cavity accommodating the magnetic ring is provided on a side that is of the second cover body and that is away from the wireless charger.

In this embodiment of this application, the magnetic ring is disposed on the inner side and/or the outer side of the receive coil, so that magnetic resistance between the receive coil and the transmit coil can be reduced, and a coupling coefficient between the receive coil and the transmit coil can be increased. In this way, a magnetic leakage problem of the electronic device in a wireless charging process can be avoided, and wireless charging efficiency can be improved.

In an optional implementation, a cross section of the receive coil is in a rectangular shape. Based on such a design, a thickness or an area of the coil can be reduced, and a wireless charging function with same efficiency can be realized.

In an optional implementation, an accommodation groove is provided on the side that is of the first cover body and that is close to the wireless charger, and the accommodation groove is configured to accommodate the receive coil and the magnetic shielding component.

In an optional implementation, the electronic device further includes a heart rate board, a groove is provided at a center position of the first cover body, and the heart rate board is disposed in the groove.

In an optional implementation, a limiting part is further disposed on the side that is of the first cover body and that is close to the wireless charger, and the limiting part is capable of being disposed around the groove. Based on such a design, the magnetic shielding component, the receive coil, and the magnetic ring can be limited and fixed.

In an optional implementation, the magnetic shielding component, the receive coil, and the magnetic ring are all sleeved on the limiting part.

In an optional implementation, the receive coil, the magnetic shielding component, and the magnetic ring are coaxially disposed.

In an optional implementation, the electronic device further includes a first permanent magnet that is magnetically attracted to a first permanent magnet in the wireless charger, and the first permanent magnet is accommodated in the groove. In this way, the receive coil and the transmit coil can be accurately aligned.

According to a second aspect, this application further provides a wireless charging system, including a wireless charger and an electronic device. The wireless charger includes a transmit coil, and the electronic device includes a housing, a receive coil, a magnetic shielding component, and a magnetic ring. The housing includes a lower cover, and the lower cover includes a first cover body and a second cover body connected to the first cover body. The magnetic shielding component is disposed on a side that is of the first cover body and that is close to the wireless charger. The receive coil is disposed on the side that is of the first cover body and that is close to the wireless charger, the receive coil is attached to the magnetic shielding component, and the receive coil is configured to: convert an alternating field transmitted by the transmit coil of the wireless charger into an alternating current, and transmit the alternating current to the electronic device for charging. The magnetic ring is disposed on an inner side and/or an outer side of the receive coil, and an inner cavity accommodating the magnetic ring is provided on a side that is of the second cover body and that is away from the wireless charger. The wireless charging system in this application can avoid a magnetic leakage problem of the electronic device in a wireless charging process, and improve wireless charging efficiency.

In an optional implementation, cross sections of the transmit coil and the receive coil are both in rectangular shapes. Based on such a design, a thickness or an area of the coil can be reduced, and a wireless charging function with same efficiency can be realized.

In an optional implementation, the electronic device is a smartwatch or a smart band.

According to the electronic device and the wireless charging system in this application, the receive coil and the magnetic ring are disposed at a protruding position of a bottom cover, so that a coupling coefficient between the receive coil and the transmit coil can be increased, magnetic leakage can be reduced, and charging efficiency can be improved.

### BRIEF DESCRIPTION OF DRAWINGS

FIG. 1 is a diagram of a structure of an electronic device in a wireless charging system;
FIG. 2 is a two-dimensional magnetic simulation diagram in which the wireless charging system in FIG. 1 is used;
FIG. 3 is a diagram of an application environment of a wireless charging system according to an embodiment of this application;
FIG. 4 is a diagram of a structure of a wireless charging system according to an embodiment of this application;
FIG. 5 is a diagram of another structure of a wireless charging system according to an embodiment of this application;
FIG. 6 is a diagram of a structure of a receive coil module according to an embodiment of this application;
FIG. 7 is a diagram of a structure of a first cover body according to an embodiment of this application;
FIG. 8 is a diagram of a first cover body and a receive coil module according to an embodiment of this application;
FIG. 9 is a diagram of a structure of a second cover body according to an embodiment of this application;
FIG. 10 is a diagram of another structure of a second cover body according to an embodiment of this application;
FIG. 11 is a cross-sectional view of FIG. 4 along an A-A line;
FIG. 12 is a diagram of structures of a receive coil module and a magnetic ring according to an embodiment of this application;
FIG. 13 is a two-dimensional magnetic simulation diagram in which a wireless charging system according to an embodiment of this application is used;
FIG. 14 is a schematic flowchart of a coil manufacturing method according to an embodiment of this application;
FIG. 15 is a diagram of a three-dimensional structure of a coil according to an embodiment of this application;
FIG. 16 is a diagram of a coil according to an embodiment of this application; and
FIG. 17 is a cross-sectional view of FIG. 16 along a B-B line.

### DESCRIPTION OF EMBODIMENTS

To make the objectives, technical solutions, and advantages of embodiments of this application clearer, the following clearly and completely describes the technical solutions in embodiments of this application with reference to accompanying drawings in embodiments of this application. It is clear that the described embodiments are merely some rather than all of embodiments of this application. All other embodiments obtained by a person of ordinary skill in the art based on embodiments of this application without creative efforts shall fall within the protection scope of this application.

When one element is considered to be "connected" to another element, the element may be directly connected to the another element, or an element may exist between them. When one element is considered to be "disposed" on another element, the element may be directly disposed on the another element, or an element may exist between them.

Unless otherwise defined, all technical and scientific terms used in this specification have same meanings as those usually understood by a person skilled in the art of this application. Terms used in this specification of this application are merely intended to describe specific embodiments, but are not intended to limit this application. The term "and/or" used in this specification includes any and all combinations of one or more related listed items.

With development of wireless technologies, wireless charging increasingly becomes a more convenient charging trend. Compared with a conventional cable plug-in electric energy transmission technology, a wireless charging technology is more secure, more convenient, and more reliable because there is no cable connection between a power supply in the wireless charging technology and a load in a wireless electric energy transmission process.

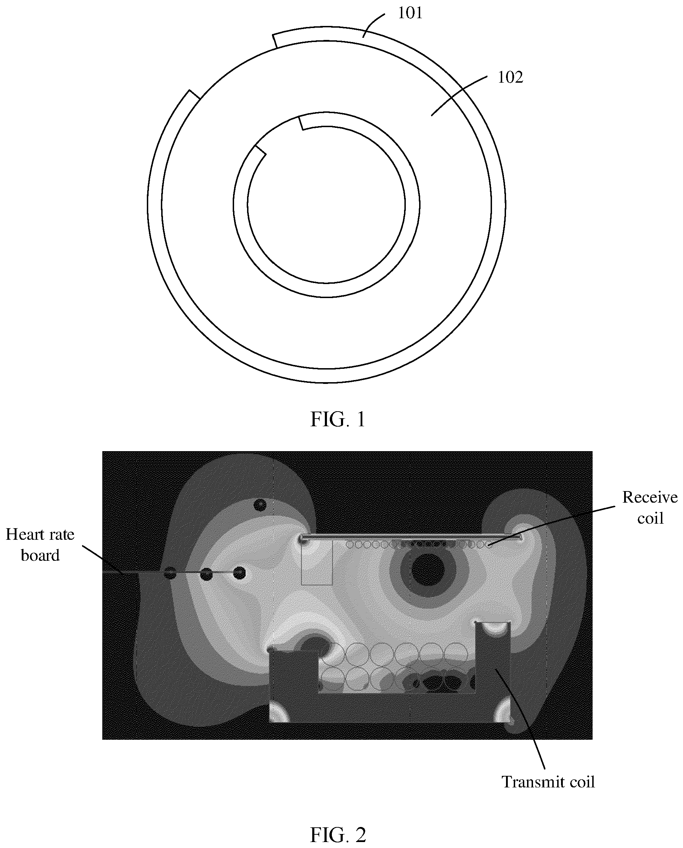

With popularization of wireless charging on wearable devices, users impose a higher requirement on user experience of wireless charging. For example, in an application scenario, if a smartwatch needs to realize a heart rate detection function, a shielding material at the center of a receive coil of the smartwatch needs to be hollowed out, to reserve a position for a heart rate board. As shown in FIG. 1, in a possible scenario, an electronic device may receive, in a form of an alternating magnetic field, electromagnetic energy sent by a wireless charger, and charge the electronic device. The electronic device may include a magnetic shielding component 101 and a receive coil 102. The receive coil 102 may be disposed on the magnetic shielding component 101. The receive coil 102 and the magnetic shielding component 101 may be coaxially disposed. To realize functions such as an electrocardiogram monitoring function of the electronic device, a magnetic shielding material at a center position of the receive coil 102 is hollowed out, to reserve a position for a heart rate board.

When wireless charging is performed on the electronic device with the wireless charger in the foregoing scenario, severe magnetic leakage occurs at the center position of the receive coil 102. In a two-dimensional magnetic simulation diagram shown in FIG. 2, a coupling coefficient between the receive coil of the electronic device and a transmit coil of the wireless charger is reduced, magnetic leakage causes a severe eddy current loss on a metal component of the electronic device, and charging efficiency is reduced. As a result, heat is generated during charging, and a charging time is prolonged.

For the problem in the foregoing scenario, this application provides an electronic device and a wireless charging system, to avoid a magnetic leakage problem of the electronic device in a wireless charging process, and effectively improve the charging efficiency.

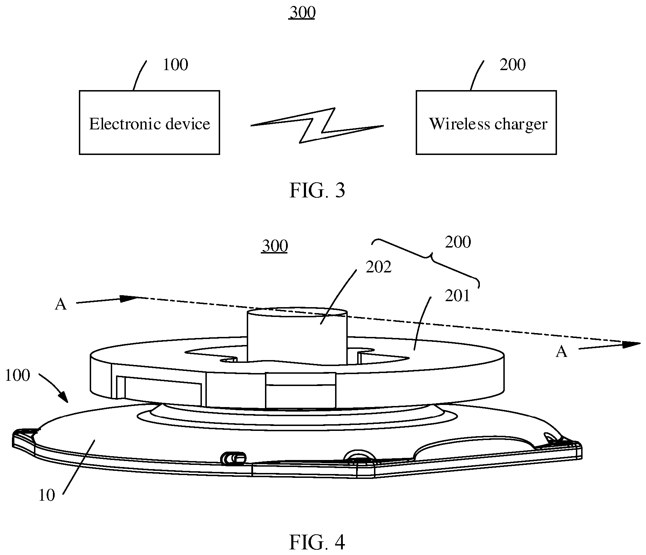

FIG. 3 is a diagram of a wireless charging system 300 according to an embodiment of this application.

In this embodiment, the wireless charging system 300 may include an electronic device 100 and a wireless charger 200. In the wireless charging system, the wireless charger 200 may be used as a power supply device, and the electronic device 100 may be used as a powered device. It may be understood that the electronic device 100 may be but is not limited to low-power wearable electronic devices such as a smartwatch and a band.

In the embodiment shown in FIG. 3, an example in which the electronic device 100 is a smartwatch is used. The wireless charger 200 may be connected to a direct current power supply, and the wireless charger 200 is configured to send energy of the direct current power supply to the electronic device 100 in a form of an alternating magnetic field.

The electronic device 100 is configured to: receive, in the form of an alternating magnetic field, the electromagnetic energy sent by the wireless charger 200, and charge the electronic device 100.

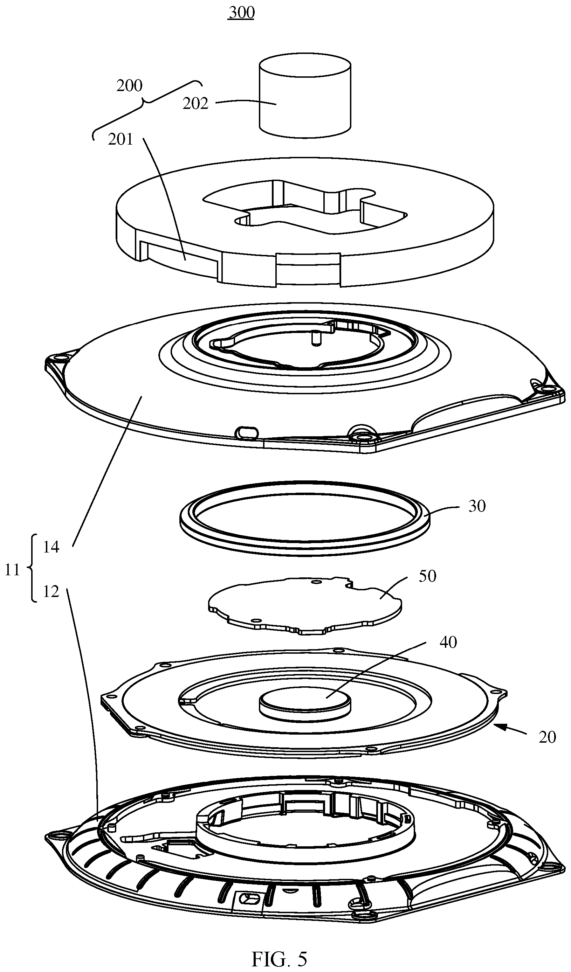

FIG. 4 and FIG. 5 are diagrams of structures of a wireless charging system 300 according to an embodiment of this application. In this embodiment, the wireless charging system 300 may include an electronic device 100 and a wireless charger 200.

The wireless charger 200 may include a transmit coil 201 and a permanent magnet 202. The permanent magnet 202 may be disposed at a center position of the transmit coil 201.

In some possible implementations, a head end and a tail end of the transmit coil 201 may be both extended with a conducting wire, so that the transmit coil 201 can be electrically connected to an inverter circuit (not shown in the figure) of the wireless charger 200 through the conducting wire. The inverter circuit of the wireless charger 200 may invert a direct current output by a direct current power supply to an alternating current, and the transmit coil 201 may transmit the alternating current in a form of an alternating magnetic field.

Based on such a design, the transmit coil 201 may cooperate with a receive coil in the electronic device 100, to implement magneto-electric conversion, so that a battery of the electronic device 100 can be charged.

As shown in FIG. 5, the electronic device 100 in this embodiment may include a housing 10, a receive coil module 20, a magnetic ring 30, a permanent magnet 40, and a heart rate board 50.

The receive coil module 20, the magnetic ring 30, the permanent magnet 40, and the heart rate board 50 may all be disposed inside the electronic device 100. In other words, the receive coil module 20, the magnetic ring 30, the permanent magnet 40, and the heart rate board 50 may all be accommodated in the housing 10 of the electronic device 100.

In a specific implementation process, the housing 10 may include a bottom cover 11. The receive coil module 20, the magnetic ring 30, the permanent magnet 40, and the heart rate board 50 may all be accommodated in the bottom cover 11. The housing 10 may further include a middle frame (not shown in the figure). The bottom cover 11 may be connected to the bottom of the middle frame.

The housing 10 may further include a top cover (not shown in the figure), and the top cover may be connected to the top of the middle frame. The top cover may be provided with an interaction interface for interacting with a user.

The bottom cover 11 may include a first cover body 12 and a second cover body 14. The second cover body 14 is disposed on a side that is of the first cover body 12 and that is close to the wireless charger 200. The first cover body 12 may cooperate with the second cover body 14, to accommodate the receive coil module 20, the magnetic ring 30, the permanent magnet 40, and the heart rate board 50.

The receive coil module 20 may include a receive coil 22 and a magnetic shielding component 24.

The receive coil 22 may be configured to cooperate with the transmit coil inside the wireless charger 200 to implement magneto-electric conversion, to charge the electronic device 100.

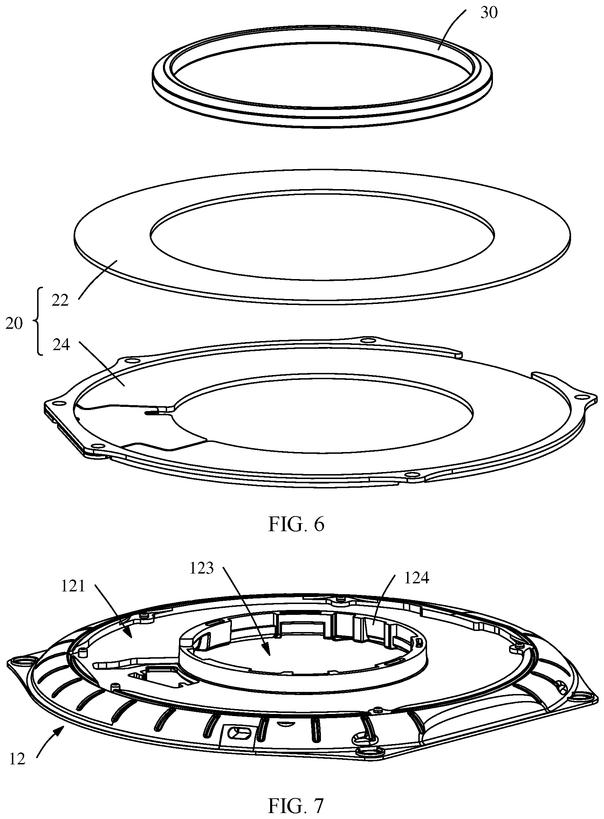

Refer to FIG. 6. In this embodiment, the receive coil 22 may be a planar coil.

In a possible implementation, the receive coil 22 may be a planar coil in a circular shape. It may be understood that, in another implementation, the receive coil 22 may alternatively be in another shape such as an ellipse or a polygon. This is not specifically limited in this application.

In an example, the receive coil 22 may be of a circular structure formed through surrounding of a metal wire. Ahead end and a tail end of the receive coil 22 may be both extended with a conducting wire, so that the receive coil 22 is electrically connected to a charging circuit of the electronic device 100 through the conducting wire. For example, the receive coil 22 may be electrically connected to a receive chip. The receive coil 22 receives energy transmitted by the wireless charger 200 and generates an alternating current. The receive chip performs rectification and conversion on the received alternating current, and outputs a direct current to charge the battery of the electronic device 100.

In this embodiment of this application, cross sections of the transmit coil 201 and the receive coil 22 are both in rectangular shapes or square shapes.

The magnetic shielding component 24 may be disposed on a side that is of the receive coil 22 and that is away from the wireless charger 200. For example, the magnetic shielding component 24 may be attached to the receive coil 22. The magnetic ring 30 may be disposed on an inner side of the receive coil 22.

In an example, the magnetic shielding component 24 may be made of a nanocrystalline magnetic shielding material. The magnetic shielding component 24 may be configured to realize a shielding function of the electronic device 100.

For example, the magnetic shielding component 24 may be configured to avoid interference, with another component of the electronic device, of a magnetic field generated during magneto-electric conversion between the electronic device 100 and the wireless charger 200.

The magnetic shielding component 30 may be further configured to realize magnetic concentration effect of the electronic device 100. For example, the magnetic shielding component 24 may enable the magnetic field to be concentrated between the receive coil 22 and the transmit coil of the wireless charger 200. In this way, coupling effect can be improved, and further, wireless charging efficiency can be improved.

As shown in FIG. 7, an accommodation groove 121 may be provided on the side that is of the first cover body 12 and that is close to the wireless charger 200. In this embodiment, the receive coil module 20 may be accommodated in the accommodation groove 121. It may be understood that, in some other embodiments, no accommodation groove may be provided on the side that is of the first cover body 12 and that is close to the wireless charger 200.

A groove 123 may be provided at a center position of the first cover body 12, and the permanent magnet 40 and the heart rate board 50 are disposed in the groove 123.

The permanent magnet 40 and the permanent magnet 202 may be attracted to each other, so that the receive coil 22 of the electronic device 100 and the transmit coil 201 of the wireless charger 200 are accurately positioned.

It may be understood that, in this embodiment of this application, the electronic device 100 may realize functions such as an electrocardiogram monitoring function by using the heart rate board 50.

In some optional implementations, a limiting part 124 may be further disposed on the side that is of the first cover body 12 and that is close to the wireless charger 200, and the limiting part 124 may be disposed around the groove 123.

In an example, the limiting part 124 may be of an annular protrusion structure.

In this embodiment, the magnetic shielding component 24 may be accommodated in the accommodation groove 121 and sleeved on the limiting part 124. The receive coil 22 may be attached to the magnetic shielding component 24 and sleeved on the limiting part 124. The receive coil 22 and the magnetic shielding component 24 may be coaxially disposed. It may be understood that the limiting part 124 in this embodiment may fix and limit the receive coil 22 and the magnetic shielding component 24.

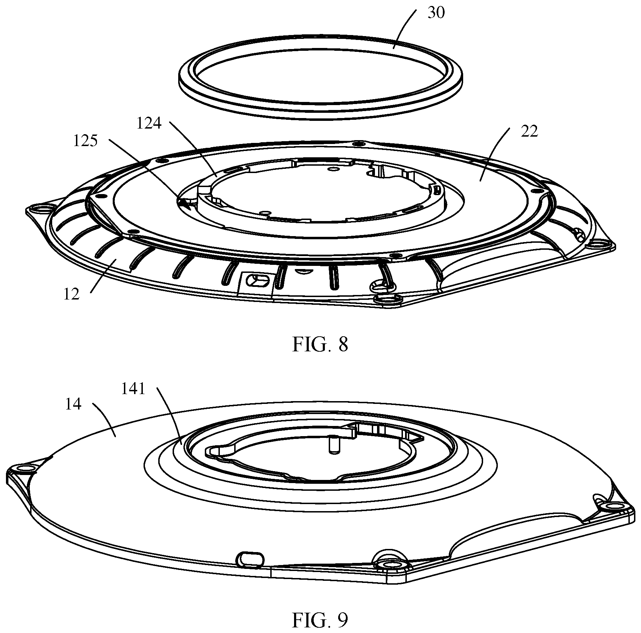

As shown in FIG. 8, in this embodiment, a gap 125 may be provided between the receive coil 22 and the limiting part 124. Based on such a structure design, the magnetic ring 30 may be disposed on the inner side of the receive coil 22 and sleeved on the limiting part 124. The magnetic ring 30 may be a ferrite magnetic ring. In some embodiments, the receive coil 22, the magnetic shielding component 24, and the magnetic ring 30 may be coaxially disposed. Based on this implementation, magnetic resistance between the receive coil and the transmit coil can be reduced, and a coupling coefficient between the receive coil and the transmit coil can be increased.

It may be understood that, in another possible implementation, the magnetic ring 30 may alternatively be disposed on an outer side of the receive coil 22. In this implementation, the magnetic resistance between the receive coil and the transmit coil can also be reduced, and effect of improving the coupling coefficient between the receive coil and the transmit coil can be realized.

It may be understood that, in another possible implementation, one magnetic ring 30 may be disposed on each of the inner side and the outer side of the receive coil 22.

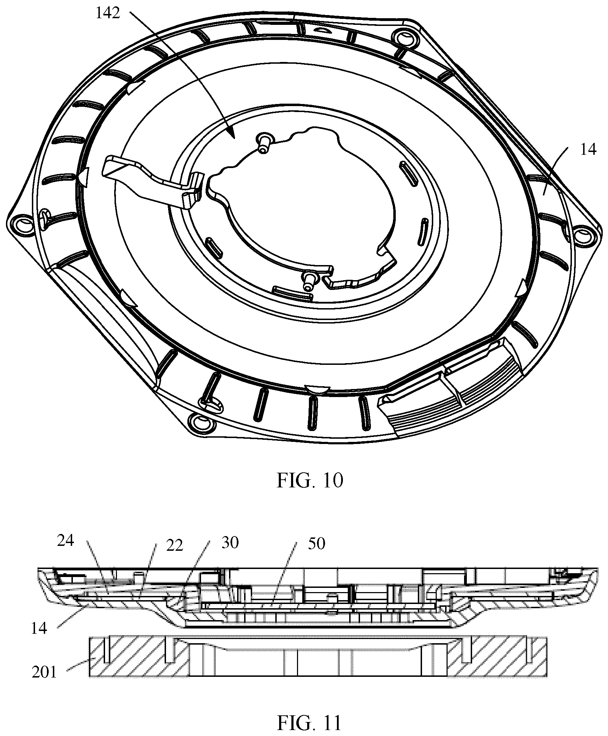

FIG. 9 and FIG. 10 are diagrams of structures of the second cover body 14 according to an embodiment of this application.

In this embodiment, a protruding portion 141 may be provided on a side that is of the second cover body 14 and that is close to the wireless charger 200, so that the electronic device 100 can be in contact with a body part of the user, and physiological information data of the user can be collected more conveniently.

An inner cavity 142 may be provided on a side that is of the second cover body 14 and that is away from the wireless charger 200, and the inner cavity 142 may correspond to the protruding portion 141.

It may be understood that, when the magnetic ring 30 is disposed on the inner side of the receive coil 22, at least a portion of the magnetic ring 30 may be accommodated in the inner cavity 142.

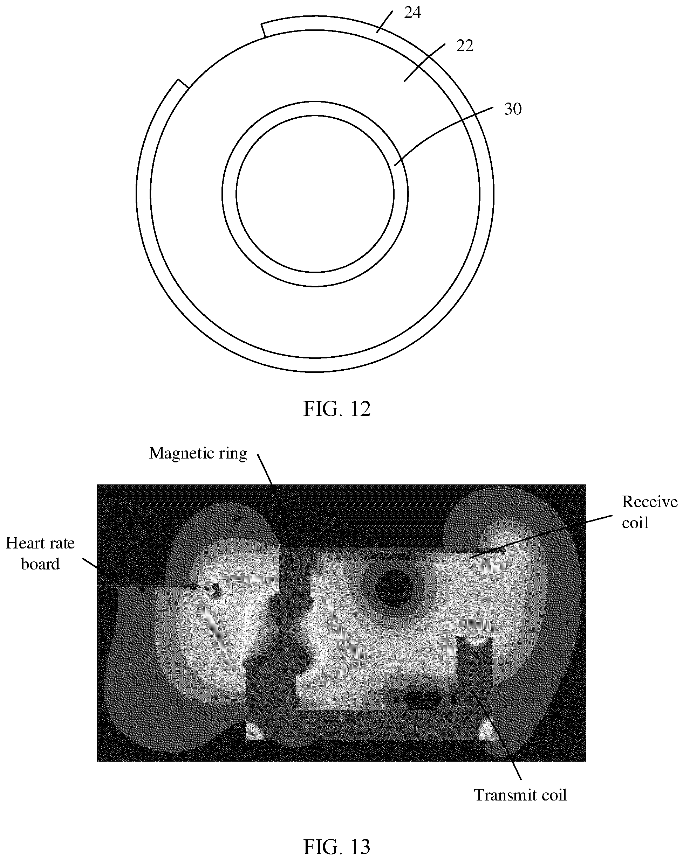

As shown in FIG. 11 and FIG. 12, when the wireless charger 200 performs wireless charging on the electronic device 100, mutual attraction between the permanent magnet 202 and the permanent magnet 40 can enable accurate positioning of the receive coil 22 and the transmit coil 201. The magnetic ring 30 is disposed on the inner side of the receive coil 22, and at least a portion of the magnetic ring 30 is accommodated in the inner cavity 142. In this way, a heart rate protruding position can be used to mount the magnetic ring 30, heart rate protruding space of the electronic device 100 can be fully utilized without increasing a thickness of the entire electronic device.

FIG. 13 is a two-dimensional magnetic simulation diagram of the wireless charging system according to this application.

In comparison with the two-dimensional magnetic simulation diagram shown in FIG. 2, as shown in FIG. 13, in the wireless charging system in this application, the magnetic ring 30 is disposed on the inner side of the receive coil 22 by using the heart rate protruding position, so that the magnetic resistance between the receive coil 22 and the transmit coil 201 can be reduced. In this way, the coupling coefficient between the receive coil 22 and the transmit coil 201 can be greatly improved. In comparison with the conventional solution, a metal eddy current loss of the wireless charging system in this application is significantly optimized.

In some possible scenarios, a charging coil (for example, the receive coil and the transmit coil) is wound by using an enameled wire whose cross section is in a circular shape. After circular enameled wires are stacked and arranged, a phenomenon of a tangent between circles exists. In other words, a next layer of coil needs to be located between tangent points of a previous layer. Within a specific coil thickness, an unavailable invalid region is formed outside the circular cross section. In addition, a winding process of the coil also limits an overall shape to a regular shape with an outer rounded corner, such as a circle, a rectangle, or an ellipse, rather than speciallyshaped coils with an inner rounded corner.

For the problem in the foregoing scenario, in embodiments of this application, laser or etching processing may be performed on a metal sheet, to manufacture the charging coil. Compared with a wound coil whose cross section is of a circular shape, the receive coil and the transmit coil whose cross sections are of rectangular shapes or square shapes in this application can reduce a thickness or an area of the coil, to realize the wireless charging function with same efficiency.

This application further provides a coil manufacturing method. The receive coil and the transmit coil described above may be manufactured according to the coil manufacturing method. Therefore, the foregoing description content of the receive coil and the transmit coil may also be used to explain the coil manufacturing method in this application.

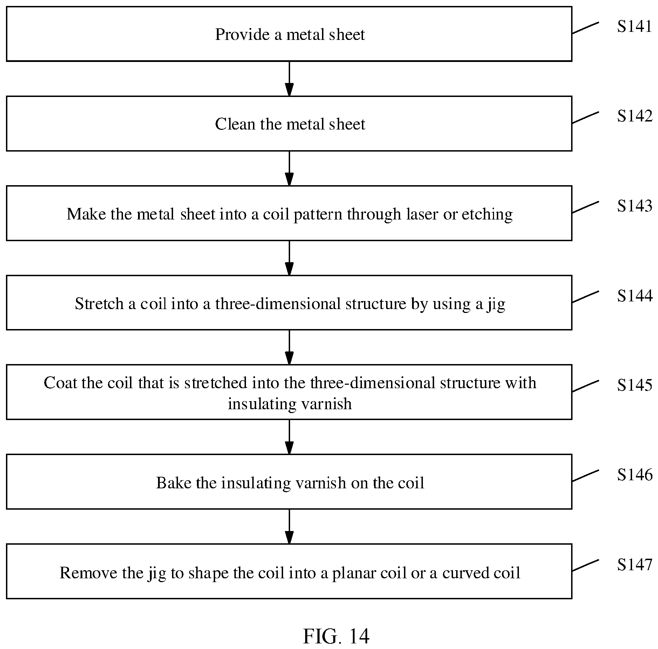

FIG. 14 is an example flowchart of a coil manufacturing method according to an embodiment of this application. As shown in FIG. 14, the coil manufacturing method in this embodiment of this application may include the following steps.

Step S141: Provide a metal sheet.

In this embodiment, the metal sheet may be a copper sheet.

Step S142: Clean the metal sheet.

For example, in this embodiment, the metal sheet may be cleaned by using an acid solution or an alkaline solution.

Step S143: Make the metal sheet into a coil pattern through laser or etching.

An example in which the metal sheet is made of copper is used for description. The copper is processed into the coil pattern by using a laser or an etching process. In this embodiment, a line width, a thickness, and a total length of the coil may be adjusted. In this way, a quantity of coils can be ensured, and a resistance value required by a wireless charging function can be further met. For example, it is assumed that a diameter of an enameled copper wire is 0.25 mm, and a cross-sectional area of the enameled copper wire is 0.049 square millimeters. In this embodiment, a line width of a metal sheet coil is 0.33 mm, and a thickness of the metal sheet coil is 0.15 mm. This may be equivalent to a cross-sectional area of a copper wire winding the coil and a resistance value of the coil.

A laser engraving molding process or the etching process in this embodiment may implement a minimum gap of the coil.

The laser engraving molding process is used as an example for description. When the metal sheet is cut through laser, and a laser incision is very narrow. For example, a red copper foil with a thickness of 0.15 millimeters may be cut through laser, and a minimum incision width may be 0.025 millimeters. In the laser engraving process, the metal sheet may be stamped out of a specific three-dimensional structure first, and a tail end with a step or a flange may be processed first. In this way, three-dimensional assembly space of different products can be better adapted.

The metal etching process is used as an example for description. An implementation process of the metal etching process is as follows: First, photosensitive ink may be printed on a surface of the metal sheet, then exposure and development are performed to form a coil pattern, and then chemical corrosion engraving is performed, to obtain a coil structure. A copper sheet with a thickness of 0.15 millimeters is used as an example. A minimum width of an etched groove may be 0.10 millimeters. After insulation coating is completed on a surface of the metal sheet, gathering may be performed with assistance of a flat jig, a gap between two turns of the coil is reduced to zero, and then a PET film with adhesive is attached.

It may be understood that a shape of the coil obtained through laser or etching may be flexibly adjusted according to an actual requirement. For example, the shape of the coil may be a circle, a square, an ellipse, or the like. This is not specifically limited in this application.

Step S144: Stretch the coil into a three-dimensional structure by using a jig.

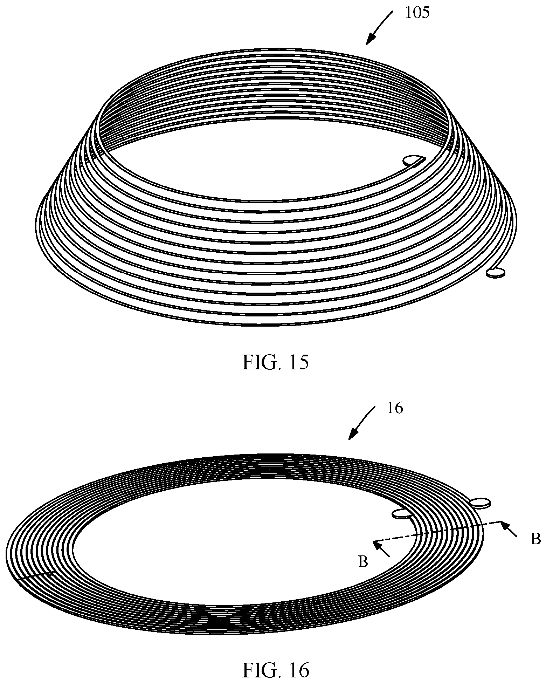

After the coil is obtained by using the laser or etching process, in this embodiment, two or more connection points may be reserved between an outer turn of the coil and a copper foil, to facilitate fixing of the coil. As shown in FIG. 15, in this embodiment, an inner turn of the coil may be further raised to a preset height and a preset distance is extended between two adjacent turns of the coil by using the jig, to stretch the coil into a coil 105 of the three-dimensional structure. In this case, the coil 105 is no longer in a gathered state.

Step S145: Coat the coil which is stretched into the three-dimensional structure with insulating varnish.

In this embodiment, the coil is stretched into the coil of the three-dimensional structure by using the jig. This helps spray or electroplate the coil with the insulating varnish.

Step S146: Bake the insulating varnish on the coil.

Step S147: Remove the jig to shape the coil into a planar coil or a curved coil.

After the insulating varnish on the coil is baked for a preset time period, in this embodiment, the jig may be removed, so that the coil is restored to the gathered state, to obtain a coil 106 shown in FIG. 16. The coil 106 may be the planar coil or the curved coil. A thickness of a common insulating varnish film may be 0.015 millimeters, a gap between two adjacent turns of the coil in the gathered state is zero, and there are more turns of metal coils in a same area, so that a limited charging area can be fully utilized. Therefore, the transmit coil 201 and the receive coil 22 in embodiments of this application may be formed according to the foregoing coil manufacturing method.

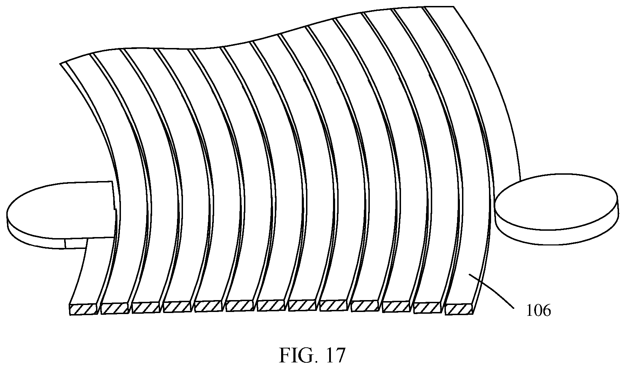

As shown in FIG. 17, a cross section of the coil 106 is in a rectangular shape. Compared with a conventional circular conducting wire on which a phenomenon of a tangent between circles exists during coil winding, that is, a next layer of coil may be located between tangent points of a previous layer, it can be learned from FIG. 15 that, in this implementation of this application, the coil whose cross section is in the rectangular shape and that is obtained by using the foregoing coil manufacturing method may reduce the thickness or the area of the coil, and realize the wireless charging function with same efficiency.

A person of ordinary skill in the art should understand that the foregoing implementations are merely intended to describe this application but are not intended to limit this application. Appropriate modifications and variations made to the foregoing implementations shall fall within the protection scope of this application provided that the modifications and variations fall within the essence and spirit of this application.

## Claims

1. An electronic device, configured to perform wireless charging with a wireless charger, and comprising a housing, a receive coil, a magnetic shielding component, and a magnetic ring, wherein
the housing comprises a lower cover, and the lower cover comprises a first cover body and a second cover body connected to the first cover body;
the magnetic shielding component is disposed on a side that is of the first cover body and that is close to the wireless charger;
the receive coil is disposed on the side that is of the first cover body and that is close to the wireless charger, the receive coil is attached to the magnetic shielding component, and the receive coil is configured to: convert an alternating field transmitted by a transmit coil of the wireless charger into an alternating current, and transmit the alternating current to the electronic device for charging; and
the magnetic ring is disposed on an inner side and/or an outer side of the receive coil, and an inner cavity accommodating the magnetic ring is provided on a side that is of the second cover body and that is away from the wireless charger.

2. The electronic device according to claim 1, wherein
a cross section of the receive coil is in a rectangular shape.

3. The electronic device according to claim 1 or 2, wherein
an accommodation groove is provided on the side that is of the first cover body and that is close to the wireless charger, and the accommodation groove is configured to accommodate the receive coil and the magnetic shielding component.

4. The electronic device according to any one of claims 1 to 3, wherein
the electronic device further comprises a heart rate board, a groove is provided at a center position of the first cover body, and the heart rate board is disposed in the groove.

5. The electronic device according to claim 4, wherein
a limiting part is further disposed on the side that is of the first cover body and that is close to the wireless charger, and the limiting part is capable of being disposed around the groove.

6. The electronic device according to claim 5, wherein
the magnetic shielding component, the receive coil, and the magnetic ring are all sleeved on the limiting part.

7. The electronic device according to any one of claims 1 to 5, wherein
the receive coil, the magnetic shielding component, and the magnetic ring are coaxially disposed.

8. The electronic device according to claim 4, wherein
the electronic device further comprises a first permanent magnet that is magnetically attracted to a first permanent magnet in the wireless charger, and the first permanent magnet is accommodated in the groove.

9. A wireless charging system, comprising a wireless charger and an electronic device, wherein the wireless charger comprises a transmit coil, and the electronic device comprises a housing, a receive coil, a magnetic shielding component, and a magnetic ring;
the housing comprises a lower cover, and the lower cover comprises a first cover body and a second cover body connected to the first cover body;
the magnetic shielding component is disposed on a side that is of the first cover body and that is close to the wireless charger;
the receive coil is disposed on the side that is of the first cover body and that is close to the wireless charger, the receive coil is attached to the magnetic shielding component, and the receive coil is configured to: convert an alternating field transmitted by the transmit coil of the wireless charger into an alternating current, and transmit the alternating current to the electronic device for charging; and
the magnetic ring is disposed on an inner side and/or an outer side of the receive coil, and an inner cavity accommodating the magnetic ring is provided on a side that is of the second cover body and that is away from the wireless charger.

10. The wireless charging system according to claim 9, wherein
cross sections of the transmit coil and the receive coil are both in rectangular shapes.

11. The wireless charging system according to claim 9 or 10, wherein
the electronic device is a smartwatch or a smart band.
